# EUROPEAN PATENT SPECIFICATION

(11) **EP 1 784 346 B1**
(45) Date of publication and mention of the grant of the patent: **05.10.2011**
(21) Application number: 05772387.6
(22) Date of filing: 12.08.2005
(51) Int. Cl.: B65D 85/804

(54) **Tea pad with a holder**
Teepad mit Halter
Dosette de thé avec support

(30) Priority: 12.08.2004 NL 1026834
(43) Date of publication of application: 16.05.2007
(73) Proprietor: Sara Lee/DE N.V., 3532 AA Utrecht (NL)
(72) Inventor: BROUWER, Gustaaf, Frans, NL-3862 KC Nijkerk (NL); PERTON, Maria, Constantina, Johanna, NL-3607 DM Maarssen (NL); DE VRIES, Joost, Jan, NL-8443 AK Heerenveen (NL)
(74) Representative: van Loon, C.J.J.
(86) International application number: PCT/NL2005/000588
(87) International publication number: WO 2006/016813

(56) References cited:
- WO-A-99/58035
- GB-A- 2 087 350
- US-A1- 2004 005 384

## Description

The invention relates to a tea pad in combination with a holder adapted to reveive the tea pad for preparing at least one consumption unit of tea.

Such a combination is generally disclosed in WO99/58035.

The use of coffee makers with which coffee is prepared with the aid of a pad filled with ground coffee has strongly increased over the last years. Here, the Senseo coffee maker is involved. The coffee maker is provided to this end with a holder for receiving a pad and means for pressing hot water under pressure through the pad for obtaining a coffee extract. Preferably, a coffee maker is involved in which the applied pressure of the water is 1- 2 bar.

The object of the invention is to provide a tea pad so that it becomes possible to also prepare tea with such a coffee maker while the applied pressure of the water is preferably 1-2 bar. The tea pad is thereto provided with a covering such as filtering paper, which is at least partly transmissive to a liquid such as water and which is at least virtually non-transmissive to tea, while the covering comprises at least one space which is filled with tea. Here, it is preferred that the tea pad has a flat form. More particularly, the tea pad has the form of a disc.

It further preferably holds that the tea in the space forms a tea bed with a flat form. More particularly it holds that the tea bed has the form of a disc.

It is important that, during the preparation of tea extract, channels are prevented from being formed in the bed of the tea via which the hot water can flow through the tea pad. The fact is that this has as a drawback that no proper extraction of the tea takes place, resulting in a relatively weak extract being obtained. It is further of importance that the applied pressure of the water can preferably be 1 - 2 bar. Also, if desired, the tea pad should be suitable for preparing one consumption unit of tea of, for instance, 100 - 170 ml, more particularly for instance about 140 ml, plus or minus 15%. Here, an amount of water should be pressed through the tea pad in a period of approximately 20 - 40 seconds for obtaining the tea extract. The water may then have a temperature of 88 - 95 C°, while it is further important that, if desired, deposition of scale which, together with polyphenols, forms an unattractive film on the tea, can be prevented. It is also important that in use, the tea can swell sufficiently in the pad for obtaining a proper flavour of the extract.

At least a number of these objects can be met when the tea bed has a greatest diameter of 30 - 55 mm. More preferably, it holds that the tea bed has a greatest diameter of 35 - 45 mm. Preferably, it further holds that the tea bed has a greatest height smaller than 10 mm, more preferably a greatest height smaller than 7 mm. Due to such dimensions, the risk of the formation of channels is reduced.

Preferably, it holds that the tea pad is filled with 1 - 6 gr of tea, more particularly 1 - 2.5 gr of tea. It is preferred that the tea pad is filled with an amount of tea that is smaller than approximately 1.9 gr of tea. In order to realize at least a number of the above-mentioned objects, it also holds that the volume of the tea is 60 - 90 % of the volume of the space in the tea pad in which the tea is included. More preferably, it holds that the volume of the tea is 75 - 85% of the volume of the space in the tea pad in which the tea is included. In this manner, in use, the tea can swell sufficiently.

It holds in particular that the tea pad is filled with 3 - 8 ml of tea. More preferably, it holds that the tea pad is filled with 4 - 7 ml of tea.

The tea comprises at least a first type of tea and a second type of tea while a greatest diameter of the particles of the first type of tea differs from the greatest diameter of the particles of the second type of tea. The size of the particles of the first type of tea is smaller than 0.5 mm, more specifically smaller than 0.35 mm. The size of the particles of the second type of tea is greater than 0.6 mm, more specifically greater than 0.8 mm.

Further, it preferably holds that the tea particles have a size of 0.1 - 1.2 mm, more specifically 0.24 - 0.96 mm. Such sizes can be effected by, for instance, grinding the tea. It appears that with such sizes, a good extraction can be obtained in the coffee maker. In other words, the tea pad comprises tea with a coarseness which is for instance larger than PD, and smaller than OP. However, according to a special embodiment it holds that the mm and/or particles having a size which is smaller than 0.35 mm.

In this application, tea is understood to include, inter alia, black tea, fruit tea, green tea, rooibos tea, herbal tea or herb mixtures and particular compositions thereof. Tea is further understood to include any aromas, fruit parts and spices which are further added.

A method using the invention comprises at least one tea pad is placed in the holder of the coffee maker, which tea pad is provided with a covering such as filtering paper which is at least partly transmissive to a liquid such as water and which is at least virtually non-transmissive to tea, while the covering comprises at least one space which is filled with tea. Here, it preferably holds that with the aid of the coffee maker, hot water is fed to the at least one tea pad at a pressure of 1 - 2 bar. It further preferably holds that a pressure drop across the at least one tea pad is 0.1 - 0.2 bar. More particularly it holds that a pressure drop across the outflow path is greater than a pressure drop across the at least one tea pad.

An assembly according to the invention is characterized in that the pad comprises a tea pad as described hereinabove. It holds here that a tea bed of the tea pad has a greatest height which is smaller than a greatest height of the inside space. In this manner, during use, the tea can swell properly. In particular it holds here that the tea bed of the tea pad has a greatest height which is at least 10%, and preferably at least 20% smaller than the greatest height of the inside space.

It further preferably holds that the tea pad has a width which corresponds at least virtually with a width of the inside space.

According to a highly advanced embodiment, it further holds that the outflow path is provided with a flow restriction so that in use, a pressure drop across the tea pad is smaller than a pressure drop across the outflow path. Due to the flow restriction, pressure drop across the tea pad is reduced so that the hot water in the coffee maker is prevented from being pressed through the tea bed too rapidly. If this were to happen, no optimal extraction could take place and, moreover, channel formation might occur. The flow restriction can for instance consist of a narrow passage formed in a channel, but can also consist of, for instance, a semi-permeable material such as a sinter plate through which the formed tea extract would have to flow. Preferably, the inside space has a diameter of 40 - 60 mm while a tea bed of the tea pad has a diameter of 35 - 45 mm.

A coffee maker provided with such a holder is provided with a flow restriction that can be switched on and off, upstream of the holder for preparing tea with a tea pad in the holder using the flow restriction, and for preparing coffee with a coffee pad in the holder without using the flow restriction. The flow restriction that can be switched on and off can for instance be arranged in the feed via which the hot water is fed to the holder. A tap which, for instance, can be partly closed and re-opened can be considered here. When the tap is partly closed a large part of the pressure drop will take place across the tap and not across the tea pad. This has as an advantage that the hot water will not flow through the tea pad too rapidly, so that a proper extraction is guaranteed. When, with the same coffee maker, coffee is prepared, the flow restriction can be switched off by, for instance, opening the tap and, in that case, for the purpose of preparing coffee, the flow restriction can be provided in the outflow path of the holder, for instance in a manner such that foam is formed. The result is that also when preparing coffee with the aid of a coffee pad, a part of the pressure will drop across the restriction and, hence, not across the coffee pad while what is also achieved here is that an extract is formed with a fine-bobble froth layer. If then, for the tea, a holder is used which is not provided with such a restriction, no foam is formed, but, as a result of the flow restriction that can be switched on and off, hot water can be prevented from being pressed through the tea pad too rapidly when the tea pad is used in the holder destined thereto.

The invention will presently be elucidated further with reference to the drawing. In the drawing:
Fig. 1 shows a cross-section of the tea pad according to the invention;
Fig. 2 shows a top-plan view of the tea pad according to Fig. 1;
Fig. 3 shows a possible embodiment of a holder and a tea pad received in the holder, and a part of a coffee maker in which the holder with the tea pad is received;
Fig. 4 shows a top-plan view of the holder according to Fig. 3;
Fig. 5 shows a top-plan view of an alternative embodiment of the holder according to be invention;
Fig. 6 shows a cross-section of the holder according to Fig. 5;
Fig. 7 shows, in elevation, the holder of Fig. 5; and
Fig. 8 shows a top-plan view of an alternative embodiment of a part of the holder of Fig. 5.

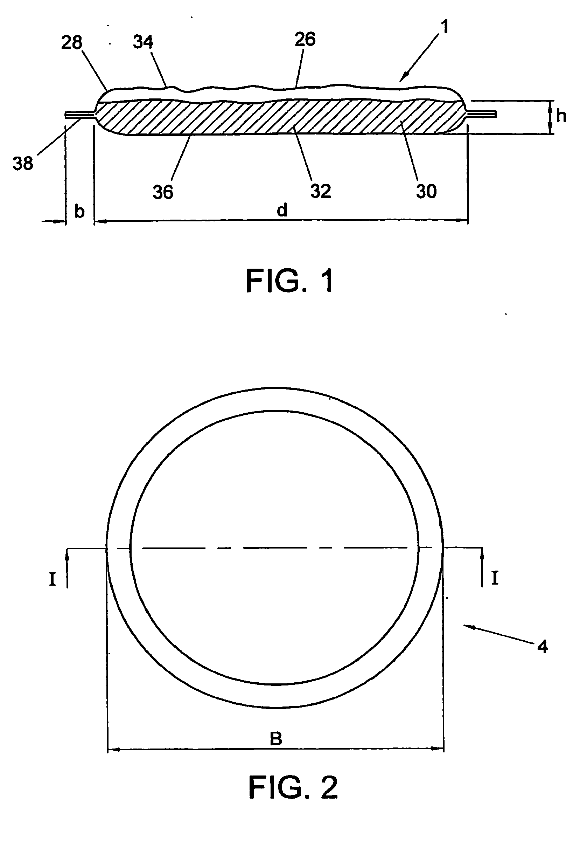

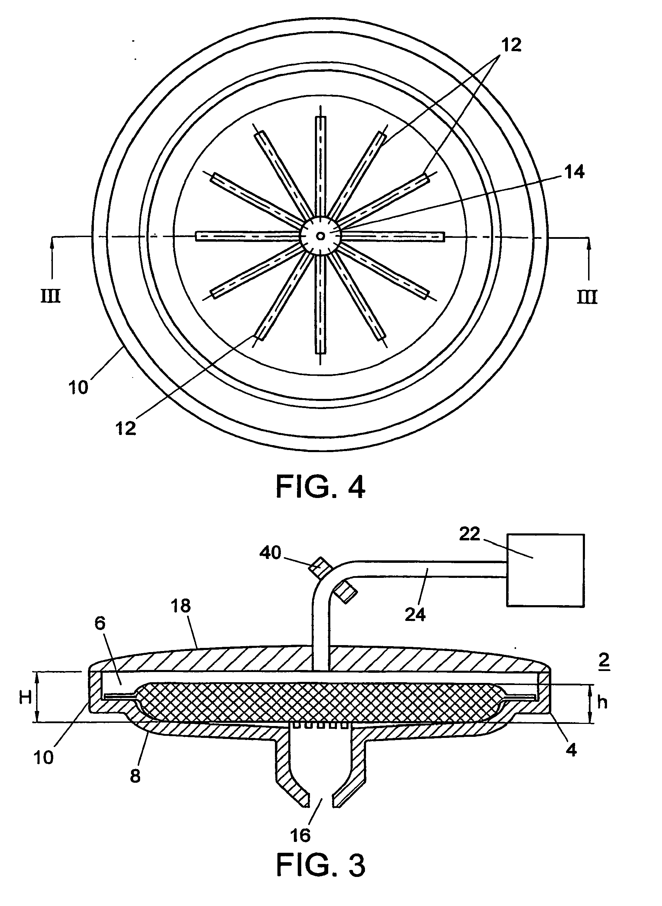

In Fig. 1, reference numeral 1 indicates a tea pad for preparing tea with the aid of a coffee maker. A part of such a coffee maker 2 is shown in Fig. 3. The coffee maker 2 is provided with a holder 4 with an inside space 6 in which the tea pad 1 is received. The inside space is formed by a bottom 8 and an upstanding sidewall 10 of the holder. In the bottom, a number of channel-shaped grooves 12 are provided which extend towards an outflow opening 14 which is also arranged in the bottom of the holder. The holder is further provided with an outlet 16 via which a tea extract can leave the holder.

The coffee maker 2 is further provided with a lid 18 with which the holder 4 can be closed off. Between lid and the holder, a fluid seal is formed. In this example, the holder is provided with at least one inflow opening 20 via which hot water can be fed to holder. The coffee maker is further provided with a hot water unit 22 which is designed for dispensing hot water under pressure. This hot water is fed via a hose 24 to the inflow opening 20 of the lid 18. In use, with the aid of the hot water unit 22, hot water is fed to the holder. This hot water is pressed under pressure through the tea pad for obtaining a tea extract. This tea extract then leaves the tea pad at its underside and, thereupon, leaves the holder via an outflow path which is formed, in this example, by the grooves 12, the outflow opening 14 and the outlet 16 and which outflow path therefore begins in the bottom of the holder and ends outside the holder for dispensing the extract. However, other outflow paths are possible too.

In this example, it holds that the hot water unit 22 dispenses hot water at a pressure which is preferably 1-2 bar.

The tea pad 1 is provided with a covering 26 such as filtering paper which is at least partly transmissive to a liquid such as water and which is at least virtually non-transmissive to tea. The covering comprises at least a (first) space 28 which is at least partly filled with tea 30 (the tea is indicated in hatching in Fig. 1). As can be seen in Fig. 1, the tea pad has a flat form. It also holds that the tea pad has the form of a disc. It further holds, as can be seen in Fig. 1, that the tea in the space forms a tea bed 32 with a flat form. It also appears that the tea bed in this embodiment has the form of a disc.

In this example, it holds that the tea bed 32 has a greatest diameter d of 30 - 55 mm. As the tea bed in this example has the form of a disc, the greatest diameter in this example will in fact be formed by the diameter of the disc. If a top plan view of the pad were square, the greatest diameter would be determined by a diagonal between two mutually opposed angular points of the tea bed.

More particularly it holds that the tea bed has a greatest diameter d of 35 - 45 mm. It appears that with such a diameter, in use, the risk of formation of channels in the tea bed is reduced. It further holds that the tea bed has a greatest height h which is smaller than 10 mm. More preferably, it holds that the tea bed has a greatest height which is smaller than 7 mm. This height is obtained when the distribution of the tea in the pad is more or less uniform. More particularly it further holds that the tea bed has a greatest height h which is greater than 2 mm. More particularly it holds that the tea bed has a greatest height h which is greater than 3 mm. Preferably, the height of the tea bed will vary between 4 - 7 mm.

In this example, the covering 26 is provided with a top sheet 34 and a bottom sheet 36 interconnected by their circumferential edges, while the interconnected circumferential edges form a sealing seam 38, each sheet being manufactured from a material such as filtering paper which is at least partly transmissive to a liquid such as water and which is at least virtually non-transmissive to tea 30.

In this example, it holds that the sealing seam has a width b which is greater than 4 mm. In particular it holds, that the sealing seam has a width greater than 5 mm. Such a sealing seam prevents the pad from tearing open in use when the tea starts swelling. The fact is that a relatively wide sealing seam gives a solid connection between the top sheet and the bottom sheet. More particularly it holds that the sealing seam has a width which is smaller than 10 mm. A larger sealing seam does not appear to be necessary. On the other hand it can be stated that the sealing seam has a size of, for instance, 5 - 12 mm, more specifically a size of 5 - 10 mm, and still more specifically of 6 - 10 mm.

It further holds that the volume of the tea 30 is 60-90 % of the volume of the space 28 in the tea pad in which the tea is included. All this is schematically indicated in Fig. 1 in that the top sheet 34 is situated at a distance above the tea 30. Naturally, in practice, the upper sheet 34 can rest on the tea 30 so that in this respect, the drawing should be considered to be schematic. More particularly it holds that the volume of the tea is 75 - 85% of the volume of the space 28 in which the tea is included. What is achieved in this manner is that in use, the tea can sufficiently swell. If the tea could not sufficiently swell, the tea is not optimally extracted which may adversely affect the strength and the flavour of the extract.

The tea is suitable in particular for preparing a consumption unit of tea in the form of an extract while the amount of extract is 100 -170 ml. Preferably, approximately 140 ml is involved, plus or minus 15%.

The hitherto described tea pad can be optimally used especially to this end.

Here, it further holds that the tea pad in this example can be filled with 3 - 8 ml of tea. More particularly it holds that the tea pad is filled with 4 - 7 ml of tea.

Here, the tea can comprise rooibos tea which may be supplemented with aromas and fruit parts. Also, the tea can comprise a herb mixture on the basis of various blends of herbs, which may be supplemented with aromas and fruit parts. The tea can also comprise a fruit tea on the basis of a black tea blend which may be supplemented with aromas and fruit parts. In the latter three cases it is preferred that 2 - 8 vol.% of the tea consists of aromas and 1 --2 vol.% of the tea consists of fruit parts.

In addition, it is possible that the tea also comprises spices and/or aromas while in the tea pad, further, sugar and/or sweeteners are included and milk powder for preparing a Chai-tea. Herein, milk powder is also understood to include any creamer, whitener *et cetera* known per se.

More generally, it holds that the tea pad in this example is filled with 1- 6 gr of tea, more specifically with 1 - 2.5 gr of tea. In particular, it holds that the tea bed has a greatest height which is greater than 2 mm. Herein, tea is understood to include, inter alia, black tea, green tea, fruit tea, rooibos tea and herbal tea. To this, aromas and fruit parts may have been added.

According to one possible embodiment, the tea pad is filled with 1 - 4 gr of black tea, more specifically with 1- 2.5 gr of black tea. However, it is also possible that the tea pad is filled with 1 - 4 gr of fruit tea, more specifically 1 - 2.5 gr of fruit tea. It is also possible that the tea pad is filled with 1 - 4 gr of green tea, more specifically with 1 - 2.5 gr of green tea. It is also possible that the tea pad is filled with 1 - 6 gr of rooibos tea, more specifically with 1.5 - 5 gr of rooibos tea. Also, the tea pad may be filled with 1 - 6 gr of tea in the form of a herb mixture, more specifically with 1- 5 gr of herb mixture. Certain mixtures of such types of tea are also possible.

It is also possible that the tea pad is filled with 6 - 11 gr of components provided with a tea comprising also spices and/or aromas, while the components further comprise a milk powder, and sugar and/or sweeteners for preparing Chai tea. In particular, it holds here that the components comprise 1.5 - 3 gr of tea. It can further hold here that the components comprise 3.5 - 6.5 gr of sugar or a comparable equivalent of sweeteners or a comparable equivalent of a combination of sweeteners and sugar.

For obtaining an optimal extract (good brewing efficiency and good flavour), it holds in this example that the tea comprises particles with a size of 0.1 - 1.2 mm. Here, the size of the particles is based on a sieve fraction. When the tea is reduced with the aid of the CTC method (Crushing-Tearing-Curling), tea particles are involved with a sphere-like structure while the size corresponds to, or is related to the diameter of the spheres. When the tea has been reduced using the orthodox method, the particles are more rod-shaped, and the size mentioned concerns, or is related to the thickness of the rods. In this example, it particularly holds that the tea comprises particles with a size of 0.24 - 0.96 mm. Preferably, it holds that the tea comprises particles with a size of 0.2 - 0.85 mm, more specifically of 0.36 - 0.84 mm.

It can also be preferred that the tea pad comprises tea with particles having a size of 0.8 mm and/or particles having a size which is smaller than 0.35 mm.

Also, the tea pad can be filled with tea such that the tea pad comprises tea with a coarseness which is greater than PD and smaller than OP.

According to the invention for obtaining an optimal tea extract it holds that the tea comprises at least a first type of tea and a second type of tea, while a size of the particles of the first type of tea differs from the size of the second type of tea. It appears that in that case, the risk of channel forming in the tea bed is reduced while the brewing efficiency and the flavour are optimal.

According to a further elaboration of this, it holds that the size of the particles of the first type of tea is smaller than 0.5 mm, more specifically smaller than 0.35 mm.

More particularly, the size of the particles of the second type of tea is greater than 0.6 mm, more specifically greater than 0.8 mm.

In this example of the tea pad according to Fig. 1, the sheet 36, viewed at least partly from outside the tea pad, is of convex design. It also holds that the top sheet 34, viewed at least partly from outside the tea pad, is of convex design. This is however not necessary. The top sheet 34 can for instance also be designed to be substantially flat. Then, the top sheet 34 is in the plane of the sealing seam 38.

In this example of the assembly according to Fig. 3, comprising the holder 4, the tea pad 1 and the lid 18, the tea bed 32 of the tea pad (in dry condition) has a greatest height h which is smaller than the greatest height H of the inside space 6 of the holder 4. (The empty space schematically indicated in Fig. 1 between the tea 30 and the top sheet, is not indicated here for the sake of simplicity; to this end, it is schematically indicated that the top sheet rests completely on the tea bed). More particularly it holds that the tea bed of the tea pad has a greatest height which is at least 10% smaller, and preferably at least 20% smaller than the greatest height H of the inside space. Here, the grooves do not contribute to the greatest height of the inside space. In this example, the greatest height is therefore determined by the bottom 8, exclusive of the grooves, and by the lid 18. The apex of the inside space of the holder is therefore determined by the lid with which the holder is closed off. In this sense, the lid and the bottom bound and determine the greatest height of the inside space. It further holds that the tea pad has a width B which virtually corresponds to a width of the inside space 6 of the holder 4. What is achieved in the manner outlined hereinabove is that, in use, the pad has sufficient space to swell in the space 28 of the holder through the swelling of the tea bed. If this were not the case, the tea can be extracted less well, resulting in a negative effect on the flavour and the brewing efficiency.

As, at the same time, it is ensured, as discussed hereinabove, that the volume of the tea is smaller than the volume of the space in the tea pad, the optimal preparation of an extract can take place with the aid of the coffee maker.

Further, in this example, the outflow path of the holder is provided with a flow restriction in the form of the outlet 16 so that, in use, a pressure drop across the tea pad is smaller than a pressure drop across the outflow path. In particular, it holds here that for instance the pressure drop across the tea pad is between 5 and 20 % of the pressure of the hot water which is fed to the assembly. A pressure drop across the tea pad in the order of magnitude of 0.1 - 0.2 bar can be considered. Here, as already stated, the pressure of the hot water can preferably be 1 - 2 bar.

It is also possible that the outlet 16 is not designed as a restriction, for instance in that the outlet 16 has a relatively great diameter. In that case, in the coffee maker, upstream of the holder, a flow restriction may be provided. This flow restriction may be provided in the hose 24. This flow restriction 40 can for instance be designed as a controllable valve forming a flow restriction that can be switched on and of, or controlled. The flow restriction can be switched on while using the holder 4 with the relatively wide outlet which does not form a flow restriction so that - although the hot water unit 22 dispenses hot water at a pressure of 1 - 2 bar - the pressure drop takes place substantially across the flow restriction 40 so that the pressure drop across the tea pad remains limited to, for instance, less than 0.2 bar. As a result, the tea pad will not be flowed-through too rapidly so that a good extraction can take place. When, thereupon, the holder 4 is replaced with a different holder in which the outlet 16 forms a nozzle, and in which the new holder 4' is filled with a coffee pad, then - when, with the aid of the hot water unit 22, hot water is fed to the assembly of coffee pad and holder while the flow restriction is switched off and therefore does not form a flow restriction - the pressure drop will take place substantially across the outlet 16. A result is that, on the one side, the pressure drop across the coffee pad is, again, smaller than the 1- 2 bar mentioned so that the coffee pad is flowed-through at a desired flow velocity, thereby allowing an optimal extraction of the coffee. At the same time, with the aid of the outlet 16, a jet of coffee extract can be generated on the basis of which, in a known manner, air can be beaten into the coffee extract. Such systems are described, inter alia, in European patent application EP 878158-A and European patent application EP 1371311-A. However, it is naturally also possible - when the tea holder 4 with a tea pad is used - that the flow restriction 40 is omitted, while a flow restriction of, for instance, semi-permeable material such as a sinter plate is provided in the outflow path. It is also conceivable that the top and/or the bottom sheet of the tea pad is designed from a semi-permeable material, so that a great pressure drop across the tea pad can indeed take place, without, however, the tea pad being flowed-through too rapidly. This semi-permeable material can consist of, for instance, filtering paper with a relatively dense coating and/or membrane. If the holder 4 is provided with an outlet 16 which forms a nozzle, downstream of the nozzle, another hose can for instance be included which prevents air from being beaten into the tea extract. The fact is that preferably, the tea extract is formed without a fine-bubble froth layer. Conversely, it is also possible to use a holder for generating tea with foam. This can be used inter alia for preparing Chai-tea.

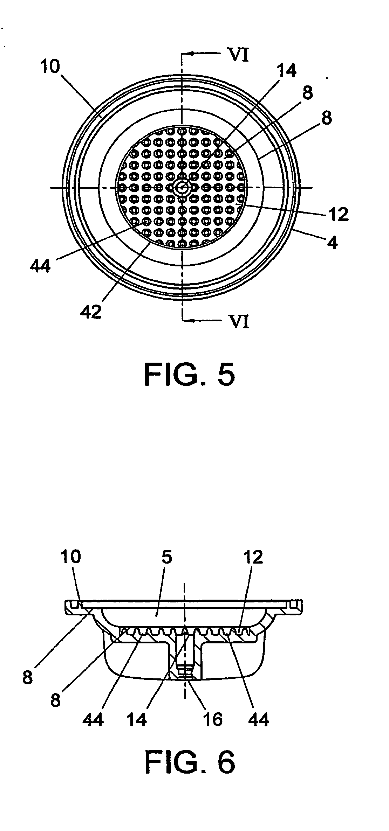

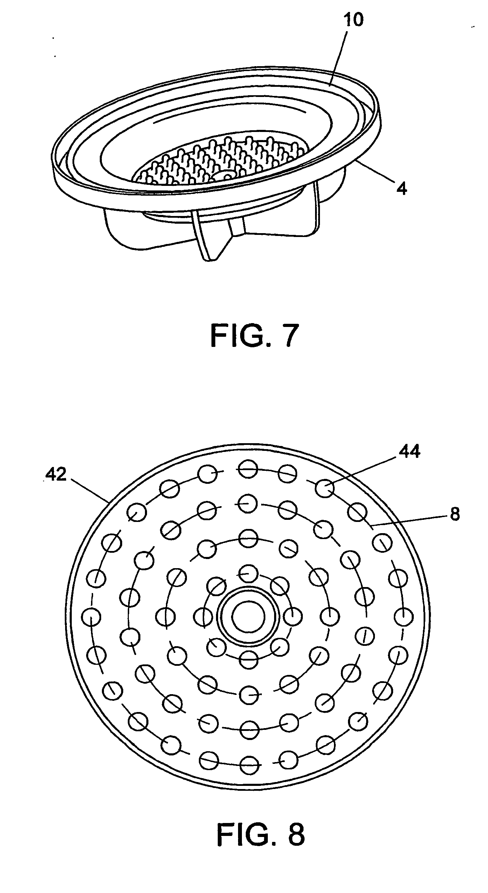

The invention is not limited in any manner to the embodiments outlined hereinabove of tea pad, holder and coffee maker. It is possible (see Fig. 5-7) that at least a part 42 of the bottom 8 of the holder 4 is provided with upstanding projections, while between the projections channel-shaped grooves are formed which extend towards the outflow opening 14. Also, the part 42 can comprise projections 44 which are for instance grouped as shown in Fig. 8.

In this application, aromas are also understood to include instant tea. The tea pads can then comprise a combination of real tea and instant tea. Further, in the space of the tea pad, a milk powder can be included. It is also possible that the tea pad is provided with a second space which is separated from the first space. In the second space, for instance a soluble product such as a milk powder can be included. Here, also a product such as cocoa can be considered. The second space can comprise a covering of the same type as described for the first space. The two coverings can then be interconnected. For instance, the pad can be provided with a top sheet, an intermediate sheet and a bottom sheet which are interconnected by their circumferential edges, while between the top sheet and the intermediate sheet the first space is formed and between the intermediate sheet and the bottom sheet the second space is formed.

It is also possible that in the holder, two separate pads are received. The first pad consists, for instance, of a top sheet and a bottom sheet, which are interconnected as described hereinabove, the bottom pad being filled with, for instance, a milk powder or cocoa or a different soluble product. On top of this pad, the above-described tea pad can be placed. In this manner, with the coffee maker, tea with milk can for instance be prepared.

Such variants are each understood to fall within the framework of the invention.

## Claims

1. A tea pad in combination with a holder adapted to receive the tea pad for preparing at least one consumption unit of tea, for use in a coffee maker, wherein the coffee maker can be provided with the holder for receiving the pad, and with means for pressing hot water under pressure through the pad when received in the holder for obtaining an extract while the applied pressure of the water is 1 - 2 bar, the tea pad being provided with a covering such as filtering paper which is at least partly transmissive to a liquid such as water and which is at least virtually non-transmissive to tea, while the covering comprises at least one space which is filled with tea and wherein the holder has an inside space formed by a bottom, an upstanding sidewall, and is bounded by a lid closing off the holder,
**characterized in that** the volume of the tea is 60 - 90% of the volume of the at least one space in the tea pad in which the tea is included, and **in that** the tea in the at least one space forms a tea bed with a flat form and a greatest height that is at least 10-20% smaller than a height of the inside grace of the holder
**in that** the tea comprises at least a first type of tea and a second type of tea, while a size of the particles of the first type of tea differs from the size of the second type of tea,
**in that** the size of the particles of the first type of tea is smaller than 0.5 mm and
**in that** the size of the particles of the second type of tea is greater than 0.6 mm.

2. A tea pad in combination with a holder according to claim 1, **characterized in that** the tea pad has a flat form.

3. A tea pad in combination with a holder according to claim 2, **characterized in that** the tea pad has the form of a disc.

4. A tea pad in combination with a holder according to claim 41, **characterized in that** the tea bed has the form of a disc.

5. A tea pad in combination with a holder according to claim 1 or 4. **characterized in that** the tea bed has a greatest diameter of 30 - 55 mm.

6. A tea pad in combination with a holder according to claim 5, **characterized in that** the tea bed has a greatest diameter of 35 - 45 mm.

7. A tea pad in combination with a holder according to any one of claims 4 1-6, **characterized in that** the tea bed has a greatest height which is smaller than 10 and wherein the holder includes an outflow path for dispensing the extract including an outflow opening and a flow restriction in the form of an outlet so that, in use, a pressure drop across the tea pad is smaller than a pressure drop across the outflow path.

8. A tea pad in combination with a holder according to claim 7, **characterized in that** the tea bed has a greatest height which is smaller than 7 mm.

9. A tea pad in combination with a holder according to any one of claims 1 - 8, **characterized in that** the tea bed has a greatest height which is greater than 2 mm.

10. A tea pad in combination with a holder according to claim 9, **characterized in that** the tea bed has a greatest height which is greater than 3 mm.

11. A tea pad in combination with a holder according to any one of the preceding claims, **characterized in that** the covering is provided with a top sheet and a bottom sheet interconnected by their circumferential edges, while the interconnected circumferential edges form a sealing seam, each sheet being manufactured from a material such as filtering paper which is at least partly transmissive to a liquid such as water and which is at least virtually non-transmissive to tea.

12. A tea pad in combination with a holder according to claim 11, **characterized in that** the sealing seam has a width which is greater than 4 mm.

13. A tea pad in combination with a holder according to claim 12, **characterized in that** the sealing seam has a width which is greater than 5 mm.

14. A tea pad in combination with a holder according to claim 12 or 13, **characterized in that** the sealing seam has a width which is smaller than 10 mm.

15. A tea pad in combination with a holder according to claim 11, **characterized in that** the sealing seam has a size of 5 - 12 mm.

16. A tea pad in combination with a holder according to claim 15, **characterized in that** the sealing seam has a size of 5 - 10 mm, more particularly of 6 - 10 mm.

17. A tea pad in combination with a holder according to any one of the preceding claims, **characterized in that** the tea pad is filled with 1 - 6 gr of tea, more particularly with 1 - 2.5 gr of tea.

18. A tea pad in combination with a holder according to any one of the preceding claims, **characterized in that** the tea pad is filled with an amount of tea which is smaller than approximately 1.9 gr of tea.

19. A tea pad in combination with a holder according to any one of the preceding claims, **characterized in that** the tea pad is filled with 1 - 4 gr of black tea, more specifically with 1-2.5 gr of black tea.

20. A tea pad in combination with a holder according to any one of the preceding claims, **characterized in that** the tea pad is filled with 1 - 4 gram of fruit tea, more specifically with 1 - 2.5 gram of fruit tea.

21. A tea pad in combination with a holder according to any one of the preceding claims, **characterized in that** the tea pad is filled with 1 - 4 gram of green tea, more specifically with 1 - 2.5 gram of green tea.

22. A tea pad in combination with a holder according to any one of the preceding claims, **characterized in that** the tea pad is filled with 1 - 6 gram of rooibos tea, more specifically with 1.5 - 5 gram of rooibos tea.

23. A tea pad in combination with a holder according to any one of the preceding claims, **characterized in that** the tea pad is filled with 1 - 6 gram of tea in the form of herb mixture, more specifically with 1 - 5 gram of herb mixture.

24. A tea pad in combination with a holder according to any one of the preceding claims, **characterized in that** the tea comprises particles with a size of 0.36 - 0.84 mm.

25. A tea pad in combination with a holder according to any one of the preceding claims, **characterized in that** the components comprise 1.5 - 3 grams of tea.

26. A tea pad in combination with a holder according to claim 24 or 25, **characterized in that** the components comprise 3.5 - 6.5 grams of sugar or a comparable equivalent of sweeteners or a comparable equivalent of a combination of sweeteners and sugar.

27. A tea pad in combination with a holder according to any one of the preceding claims, **characterized in that** the volume of the tea is 75 - 85% of the volume of the at least one space in the tea pad in which the tea is included.

28. A tea pad in combination with a holder according to any one of the preceding claims, **characterized in that** the tea pad is filled with 3 - 8 ml of tea.

29. A tea pad in combination with a holder according to claim 28, **characterized in that** the tea pad is filled with 4 - 7 ml of tea.

30. A tea pad in combination with a holder according to any one of the preceding claims, **characterized in that** the tea comprises rooibos tea which may be supplemented with aromas and/or fruit parts.

31. A tea pad in combination with a holder according to any one of the preceding claims, **characterized in that** the tea comprises a herb mixture on the basis of various blends of herbs which may be supplemented with aromas and/or fruit parts.

32. A tea pad in combination with a holder according to any one of the preceding claims, **characterized in that** the tea comprises a fruit tea on the basis of a black tea blend which may be supplemented with aromas and fruit parts.

33. A tea pad in combination with a holder according to claim 30, 31 or 32, **characterized in that** 2 - 8 volume percent of the tea consist of the aromas and 1 - 2 volume percent of the tea consists of fruit parts.

34. A tea pad in combination with a holder according to any one of the preceding claims, **characterized in that** the size of the particles of the first type of tea is smaller than 0.35 mm, and the size of the particles of the second type of tea is greater than 0,8 mm previous claim 36 deleted, so as to delete any embodiments with any other components in addition so tea and new claim 34 based on page 10, line 25 - page 11, line 5 of the application as published.

35. A tea pad in combination with a holder according to any one of the preceding claims, **characterized in that** the tea comprises particles with a size of 0.1 - 1.2 mm, more particularly of 0.24 - 0.96 mm.

36. A tea pad in combination with a holder according to claim 35, **characterized in that** the tea comprises particles with a size of 0.2 - 0.85 mm, more particularly of 0.36 - 0.84 mm.

37. A tea pad in combination with a holder according to any one of the preceding claims, **characterized in that** the tea pad comprises tea with particles having a size which is greater than 0.8 mm and particles having a size which is smaller than 0.35 mm.

38. A tea pad in combination with a holder according to any one of the preceding claims, **characterized in that** the tea pad comprises tea with a coarseness which is greater than PD and smaller than OP.

39. A tea pad in combination with a holder according to claim 11, **characterized in that** a first sheet of the two sheets, viewed at least partly from outside the tea pad, is of convex design.

40. A tea pad in combination with a holder according to claim 39, **characterized in that** a second sheet of the two sheets, viewed at least partly from outside the tea pad, is of flat or convex design.

41. A tea pad and holder according to claim 1, **characterized in that** the size of the particles of the first type of tea is smaller than 0.35 mm.

42. A tea pad and holder according to claim 1, **characterized in that** the size of the particles of the second type of tea is greater than 0.8 mm.

## Patentansprüche

1. Teepad in Kombination mit einem Halter, der dazu ausgelegt ist, das Teepad zur Herstellung von mindestens einer Verzehreinheit von Tee aufzunehmen, zur Verwendung in einer Kaffeemaschine, wobei die Kaffeemaschine mit dem Halter zum Aufnehmen des Pads und mit Mitteln zum Pressen von heißem Wasser unter Druck durch das Pad, wenn es in dem Halter aufgenommen ist, zum Erhalt eines Extrakts, während der angelegte Druck des Wasser 1 - 2 bar beträgt, bereitgestellt sein kann, wobei das Teepad mit einer Abdeckung, wie Filterpapier, bereitgestellt ist, die mindestens teilweise für eine Flüssigkeit wie Wasser durchlässig ist und die praktisch mindestens für Tee nicht durchlässig ist, während die Abdeckung mindestens einen Raum einschließt, der mit Tee gefüllt ist, und wobei der Halter einen durch einen Boden und eine aufrecht stehende Seitenwand ausgebildeten Innenraum aufweist, und über einen Deckel gebunden ist, der den Halter abschließt,
**dadurch gekennzeichnet, dass** das Volumen des Tees 60 - 90 % des Volumens des mindestens einen Raums in dem Teepad beträgt, in dem der Tee eingeschlossen ist, und **dadurch** dass der Tee in dem mindestens einen Raum ein Teebett mit einer flachen Form und einer größten Höhe bildet, die mindestens 10 - 20 % kleiner ist als eine Höhe des Innenraums des Halters, **dadurch** dass der Tee mindestens einen ersten Typ von Tee und einen zweiten Typ von Tee umfasst, während sich eine Größe der Teilchen des ersten Typs von Tee von der Größe des zweiten Typs von Tee **dadurch** unterscheidet, dass die Größe der Teilchen des ersten Typs von Tee kleiner ist als 0,5 mm und **dadurch**, dass die Größe der Teilchen des zweiten Typs von Tee größer ist als 0,6 mm.

2. Teepad in Kombination mit einem Halter nach Anspruch 1,
**dadurch gekennzeichnet, dass** das Teepad eine flache Form aufweist.

3. Teepad in Kombination mit einem Halter nach Anspruch 2,
**dadurch gekennzeichnet, dass** das Teepad die Form einer Scheibe hat.

4. Teepad in Kombination mit einem Halter nach Anspruch 1,
**dadurch gekennzeichnet, dass** das Teebett die Form einer Scheibe hat.

5. Teepad in Kombination mit einem Halter nach Anspruch 1 oder 4,
**dadurch gekennzeichnet, dass** das Teebett einen größten Durchmesser von 30 - 55 mm besitzt.

6. Teepad in Kombination mit einem Halter nach Anspruch 5,
**dadurch gekennzeichnet, dass** das Teebett einen größten Durchmesser von 35 - 45 mm aufweist.

7. Teepad in Kombination mit einem Halter nach einem der Ansprüche 1 - 6,
**dadurch gekennzeichnet, dass** das Teebett eine größte Höhe aufweist, die kleiner ist als 10 mm, und wobei der Halter einen Auslaufweg für das Abgeben des Extrakts, einschließlich einer Auslauföffnung und einer Flusseinschränkung in der Form eines Auslaufs umfasst, so dass ein Druckabfall bei Gebrauch über das Teepad geringer ist als ein Druckabfall über den Auslaufweg.

8. Teepad in Kombination mit einem Halter nach Anspruch 7,
**dadurch gekennzeichnet, dass** das Teebett eine größte Höhe aufweist, die kleiner ist als 7 mm.

9. Teepad in Kombination mit einem Halter nach einem der Ansprüche 1 - 8,
**dadurch gekennzeichnet, dass** das Teebett eine größte Höhe aufweist, die größer ist als 2 mm.

10. Teepad in Kombination mit einem Halter nach Anspruch 9,
**dadurch gekennzeichnet, dass** das Teebett eine größte Höhe aufweist, die größer ist als 3 mm.

11. Teepad in Kombination mit einem Halter nach einem der vorhergehenden Ansprüche, **dadurch gekennzeichnet, dass** die Abdeckung mit einer oberen Lage und einer unteren Lage bereitgestellt ist, die untereinander über ihre Umfangsränder verbunden sind, während die miteinander verbundenen Umfangsränder eine Verschlussnaht bilden, wobei jede Lage aus einem Material wie Filterpapier hergestellt ist, welches mindestens teilweise für eine Flüssigkeit wie Wasser durchlässig ist und welches praktisch mindestens für Tee nicht durchlässig ist.

12. Teepad in Kombination mit einem Halter nach Anspruch 11,
**dadurch gekennzeichnet, dass** die Verschlussnaht eine Breite aufweist, die größer ist als 4 mm.

13. Teepad in Kombination mit einem Halter nach Anspruch 12,
**dadurch gekennzeichnet, dass** die Verschlussnaht eine Breite aufweist, die größer ist als 5 mm.

14. Teepad in Kombination mit einem Halter nach Anspruch 12 oder 13,
**dadurch gekennzeichnet, dass** die Verschlussnaht eine Breite aufweist, die kleiner ist als 10 mm.

15. Teepad in Kombination mit einem Halter nach Anspruch 11,
**dadurch gekennzeichnet, dass** die Verschlussnaht eine Größe von 5 - 12 mm aufweist.

16. Teepad in Kombination mit einem Halter nach Anspruch 15,
**dadurch gekennzeichnet, dass** die Verschlussnaht eine Größe von 5 - 10 mm, spezieller von 6 - 10 mm aufweist.

17. Teepad in Kombination mit einem Halter nach einem der vorhergehenden Ansprüche, **dadurch gekennzeichnet, dass** das Teepad mit 1 - 6 g Tee, spezieller mit 1 - 2,5 g Tee gefüllt ist.

18. Teepad in Kombination mit einem Halter nach einem der vorhergehenden Ansprüche, **dadurch gekennzeichnet, dass** das Teepad mit einer Menge von Tee gefüllt ist, die kleiner als ungefähr 1,9 g Tee ist.

19. Teepad in Kombination mit einem Halter nach einem der vorhergehenden Ansprüche, **dadurch gekennzeichnet, dass** das Teepad mit 1 - 4 g schwarzem Tee, spezieller mit 1 - 2,5 g schwarzem Tee gefüllt ist.

20. Teepad in Kombination mit einem Halter nach einem der vorhergehenden Ansprüche, **dadurch gekennzeichnet, dass** das Teepad mit 1 - 4 g Früchtetee, spezieller mit 1 - 2,5 g Früchtetee gefüllt ist.

21. Teepad in Kombination mit einem Halter nach einem der vorhergehenden Ansprüche, **dadurch gekennzeichnet, dass** das Teepad mit 1 - 4 g grünem Tee, spezieller mit 1 - 2,5 g grünem Tee gefüllt ist.

22. Teepad in Kombination mit einem Halter nach einem der vorhergehenden Ansprüche, **dadurch gekennzeichnet, dass** das Teepad mit 1 - 6 g Rooibostee, spezieller mit 1,5 - 5 g Rooibostee gefüllt ist.

23. Teepad in Kombination mit einem Halter nach einem der vorhergehenden Ansprüche, **dadurch gekennzeichnet, dass** das Teepad mit 1 - 6 g Tee in der Form von einer Kräutermischung, spezieller mit 1 - 5 g Kräutermischung gefüllt ist.

24. Teepad in Kombination mit einem Halter nach einem der vorhergehenden Ansprüche, **dadurch gekennzeichnet, dass** der Tee Teilchen mit einer Größe von 0,36 - 0,84 mm umfasst.

25. Teepad in Kombination mit einem Halter nach einem der vorhergehenden Ansprüche, **dadurch gekennzeichnet, dass** die Bestandteile 1,5 - 8 g Tee umfassen.

26. Teepad in Kombination mit einem Halter nach Anspruch 24 oder 25, **dadurch gekennzeichnet, dass** die Bestandteile 3,5 - 6,5 g Zucker oder ein vergleichbares Äquivalent von Süßungsmitteln oder ein vergleichbares Äquivalent von einer Kombination von Süßungsmitteln und Zucker umfasst.

27. Teepad in Kombination mit einem Halter nach einem der vorhergehenden Ansprüche, **dadurch gekennzeichnet, dass** das Volumen des Tees 75 - 85 % des Volumens des mindestens einen Raums in dem Teepad besitzt, in dem der Tee eingeschlossen ist.

28. Teepad in Kombination mit einem Halter nach einem der vorhergehenden Ansprüche, **dadurch gekennzeichnet, dass** das Teepad mit 3 - 8 ml Tee gefüllt ist.

29. Teepad in Kombination mit einem Halter nach Anspruch 28,
**dadurch gekennzeichnet, dass** das Teepad mit 4 - 7 ml Tee gefüllt ist.

30. Teepad in Kombination mit einem Halter nach einem der vorhergehenden Ansprüche, **dadurch gekennzeichnet, dass** der Tee Rooibostee umfasst, der mit Aromen und/oder Fruchtteilchen ergänzt sein kann.

31. Teepad in Kombination mit einem Halter nach einem der vorhergehenden Ansprüche, **dadurch gekennzeichnet, dass** der Tee eine Kräutermischung auf der Grundlage von verschiedenen Mischungen von Kräutern einschließt, die mit Aromen und/oder Fruchtteilchen ergänzt sein können.

32. Teepad in Kombination mit einem Halter nach einem der vorhergehenden Ansprüche, **dadurch gekennzeichnet, dass** der Tee einen Früchtetee auf der Grundlage von einer Schwarzteemischung umfasst, die mit Aromen und Fruchteilchen ergänzt sein kann.

33. Teepad in Kombination mit einem Halter nach Anspruch 30, 31 oder 32, **dadurch gekennzeichnet, dass** 2 - 8 Volumenprozent des Tees aus den Aromen und 1 - 2 Volumenprozent des Tees aus Fruchtteilchen bestehen.

34. Teepad in Kombination mit einem Halter nach einem der vorhergehenden Ansprüche, **dadurch gekennzeichnet, dass** die Größe der Teilchen des ersten Typs von Tee geringer ist als 0,35 mm, und die Größe der Teilchen des zweiten Typs von Tee größer ist als 0,8 mm.

35. Teepad in Kombination mit einem Halter nach einem der vorhergehenden Ansprüche, **dadurch gekennzeichnet, dass** der Tee Teilchen mit einer Größe von 0,1 - 1,2 mm, spezieller von 0,24 - 0,96 mm einschließt.

36. Teepad in Kombination mit einem Halter nach Anspruch 35,
**dadurch gekennzeichnet, dass** der Tee Teilchen mit einer Größe von 0,2 - 0,85 mm, spezieller von 0,36 - 0,84 mm einschließt.

37. Teepad in Kombination mit einem Halter nach einem der vorhergehenden Ansprüche, **dadurch gekennzeichnet, dass** das Teepad Tee mit Teilchen mit einer Größe, die größer ist als 0,8 mm, und Teilchen mit einer Größe, die kleiner ist als 0,35 mm, einschließt.

38. Teepad in Kombination mit einem Halter nach einem der vorhergehenden Ansprüche, **dadurch gekennzeichnet, dass** das Teepad Tee mit einer Grobheit, die größer ist als PD und kleiner ist als OP einschließt.

39. Teepad in Kombination mit einem Halter nach Anspruch 11,
**dadurch gekennzeichnet, dass** eine erste Lage der beiden Lagen, betrachtet mindestens zum Teil von der Außenseite des Teepads, einen konvexen Aufbau aufweist.

40. Teepad in Kombination mit einem Halter nach Anspruch 39,
**dadurch gekennzeichnet, dass** eine zweite Lage der beiden Lagen, betrachtet mindestens teilweise von der Außenseite des Teepads, von flachem oder konvexem Aufbau ist.

41. Teepad in Kombination mit einem Halter nach Anspruch 1,
**dadurch gekennzeichnet, dass** die Größe der Teilchen des ersten Typs von Tee kleiner ist als 0,35 mm.

42. Teepad in Kombination mit einem Halter nach Anspruch 1,
**dadurch gekennzeichnet, dass** die Größe der Teilchen des zweiten Typs von Tee größer ist als 0,8 mm.

## Revendications

1. Une dosette de thé en combinaison avec un support adapté à recevoir la dosette de thé pour la préparation d'au moins une unité de consommation de thé, pour utilisation dans une machine à café, la machine à café pouvant être munie du support pour recevoir la dosette, et de moyens pour forcer de l'eau chaude sous pression à travers la dosette lorsqu'elle est placée dans le support pour obtenir un extrait tandis que la pression appliquée par l'eau est de 1 à 2 bar, la dosette de thé étant munie d'une enveloppe telle que du papier filtre qui est au moins partiellement transmissif à un liquide tel que l'eau et qui est au moins virtuellement non-transmissif au thé, l'enveloppe comprenant au moins un espace qui est rempli avec du thé et le support présentant un espace intérieur formé par un fond, une paroi latérale montante et étant délimité par un couvercle fermant le support,
**caractérisés en ce que** le volume du thé est de 60 à 90 % du volume de l'au moins un espace dans la dosette de thé dans laquelle est incorporé le thé, et **en ce que** le thé dans ledit au moins un espace forme un lit constitué de thé de forme aplatie et d'une hauteur maximale qui est au moins 10 à 20 % inférieur à une hauteur de l'espace intérieur du support, **en ce que** le thé comprend au moins un premier type de thé et un deuxième type de thé, une taille des particules du premier type de thé étant différente de celle du deuxième type de thé, **en ce que** la taille des particules du premier type de thé est inférieure à 0,5 mm, et **en ce que** la taille des particules du deuxième type de thé est supérieure à 0,6 mm.

2. La dosette de thé en combinaison avec un support selon la revendication 1, **caractérisés en ce que** la dosette de thé présente une forme aplatie.

3. La dosette de thé en combinaison avec un support selon la revendication 2, **caractérisés en ce que** la dosette de thé présente la forme d'un disque.

4. La dosette de thé en combinaison avec un support selon la revendication 1, **caractérisés en ce que** le lit de thé présente la forme d'un disque.

5. La dosette de thé en combinaison avec un support selon la revendication 1 ou 4, **caractérisés en ce que** le lit de thé présente un diamètre maximal de 3 0 à 55 mm.

6. La dosette de thé en combinaison avec un support selon la revendication 5, **caractérisés en ce que** le lit de thé présente un diamètre maximal de 35 à 45 mm.

7. La dosette de thé en combinaison avec un support selon l'une quelconque des revendications 1 à 6, **caractérisés en ce que** le lit de thé présente une hauteur maximale qui est inférieure à 10 mm et le support comprenant un chemin d'écoulement pour distribuer l'extrait qui comprend une ouverture d'écoulement et un réducteur d'écoulement sous forme d'une sortie de sorte que, au cours de l'utilisation, la chute de pression à travers la dosette de thé est inférieure à la chute de pression à travers le chemin d'écoulement.

8. La dosette de thé en combinaison avec un support selon la revendication 7, **caractérisés en ce que** le lit de thé présente une hauteur maximale qui est inférieure à 7 mm.

9. La dosette de thé en combinaison avec un support selon l'une quelconque des revendications 1 à 8, **caractérisés en ce que** le lit de thé présente une hauteur maximale qui est supérieure à 2 mm.

10. La dosette de thé en combinaison avec un support selon la revendication 9, **caractérisés en ce que** le lit de thé présente une hauteur maximale qui est supérieure à 3 mm.

11. La dosette de thé en combinaison avec un support selon l'une quelconque des revendications précédentes, **caractérisés en ce que** l'enveloppe est munie d'une feuille de dessus et d'une feuille de fond reliées entre elles par leurs bords circonférentiels, les bords circonférentiels interconnectés formant un joint de scellage, chaque feuille étant fabriquée dans un matériau tel que du papier filtre qui est au moins partiellement transmissif à un liquide, tel que de l'eau et qui est au moins virtuellement non-transmissif au thé.

12. La dosette de thé en combinaison avec un support selon la revendication 11, **caractérisés en ce que** le joint de scellage présente une largeur qui est supérieure à 4 mm.

13. La dosette de thé en combinaison avec un support selon la revendication 12, **caractérisés en ce que** le joint de scellage présente une largeur qui est supérieure à 5 mm.

14. La dosette de thé en combinaison avec un support selon la revendication 12 ou 13, **caractérisés en ce que** le joint de scellage présente une largeur qui est inférieure à 10 mm.

15. La dosette de thé en combinaison avec un support selon la revendication 11, **caractérisés en ce que** le joint de scellage présente une taille de 5 à 12 mm.

16. La dosette de thé en combinaison avec un support selon la revendication 15, **caractérisés en ce que** le joint de scellage présente une taille de 5 à 10 mm, plus particulièrement de 6 à 10 mm.

17. La dosette de thé en combinaison avec un support selon l'une quelconque des revendications précédentes, **caractérisés en ce que** la dosette de thé est remplie avec de 1 à 6 g de thé, plus particulièrement avec de 1 à 2,5 g de thé.

18. La dosette de thé en combinaison avec un support selon l'une quelconque des revendications précédentes, **caractérisés en ce que** la dosette de thé est remplie d'une quantité de thé qui est inférieure à environ 1,9 g de thé.

19. La dosette de thé en combinaison avec un support selon l'une quelconque des revendications précédentes, **caractérisés en ce que** la dosette de thé est remplie avec de 1 à 4 g de thé noir, plus particulièrement avec de 1 à 2,5 g de thé noir.

20. La dosette de thé en combinaison avec un support selon l'une quelconque des revendications précédentes, **caractérisés en ce que** la dosette de thé est remplie avec de 1 à 4 g de thé aux fruits, plus particulièrement avec de 1 à 2,5 g de thé aux fruits.

21. La dosette de thé en combinaison avec un support selon l'une quelconque des revendications précédentes, **caractérisés en ce que** la dosette de thé est remplie avec de 1 à 4 g de thé vert, plus particulièrement avec de 1 à 2,5 g de thé vert.

22. La dosette de thé en combinaison avec un support selon l'une quelconque des revendications précédentes, **caractérisés en ce que** la dosette de thé est remplie avec de 1 à 6 g de thé rooibos, plus particulièrement avec de 1,5 à 5 g de thé rooibos.

23. La dosette de thé en combinaison avec un support selon l'une quelconque des revendications précédentes, **caractérisés en ce que** la dosette de thé est remplie avec de 1 à 6 g de thé sous forme d'un mélange de plantes, et plus particulièrement avec de 1 à 5 g de thé sous forme d'un mélange de plantes.

24. La dosette de thé en combinaison avec un support selon l'une quelconque des revendications précédentes, **caractérisés en ce que** le thé comprend des particules avec une taille de 0,36 à 0,84 mm.

25. La dosette de thé en combinaison avec un support selon l'une quelconque des revendications précédentes, **caractérisés en ce que** les constituants comprennent de 1,5 à 3 g de thé.

26. La dosette de thé en combinaison avec un support selon la revendication 24 ou 25, **caractérisés en ce que** les constituants comprennent de 3,5 à 6,5 g de sucre ou d'un équivalent comparable d'édulcorants ou d'un équivalent comparable d'une combinaison d'édulcorants et de sucre.

27. La dosette de thé en combinaison avec un support selon l'une quelconque des revendications précédentes, **caractérisés en ce que** le volume du thé est de 75 à 85% du volume de l'espace dans la dosette de thé dans laquelle est incorporé le thé.

28. La dosette de thé en combinaison avec un support selon l'une quelconque des revendications précédentes, **caractérisés en ce que** la dosette de thé est remplie avec de 3 à 8 ml de thé.

29. La dosette de thé en combinaison avec un support selon la revendication 28, **caractérisés en ce que** la dosette de thé est remplie avec de 4 à 7 ml de thé.

30. La dosette de thé en combinaison avec un support selon l'une quelconque des revendications précédentes, **caractérisés en ce que** le thé comprend du thé rooibos qui peut être complété avec des arômes et/ou des morceaux de fruits.

31. La dosette de thé en combinaison avec un support selon l'une quelconque des revendications précédentes, **caractérisés en ce que** le thé comprend un mélange de plantes sur la base de divers mélanges de plantes qui peuvent être complétés avec des arômes et/ou des morceaux de fruits.

32. La dosette de thé en combinaison avec un support selon l'une quelconque des revendications précédentes, **caractérisés en ce que** le thé comprend un thé aux fruits sur la base d'un mélange de thé noir, qui peut être complété avec des arômes et des morceaux de fruits.

33. La dosette de thé en combinaison avec un support selon la revendication 30, 31 ou 32, **caractérisés en ce que** 2 à 8 pour cent du volume du thé est constitué d'arômes et que 1 à 2 pour cent du volume du thé est constitué de morceaux de fruits.

34. La dosette de thé en combinaison avec un support selon l'une quelconque des revendications précédentes, **caractérisés en ce que** la taille des particules du premier type de thé est inférieure à 0,35 mm et la taille des particules du deuxième type de thé est supérieure à 0,8 mm.

35. La dosette de thé en combinaison avec un support selon l'une quelconque des revendications précédentes, **caractérisés en ce que** le thé comprend des particules d'une taille de 0,1 à 1,2 mm, plus particulièrement de 0,24 à 0,96 mm.

36. La dosette de thé en combinaison avec un support selon la revendication 35, **caractérisés en ce que** le thé comprend des particules d'une taille de 0,2 à 0,85 mm, plus particulièrement de 0,36 à 0,84 mm.

37. La dosette de thé en combinaison avec un support selon l'une quelconque des revendications précédentes, **caractérisés en ce que** la dosette de thé comprend du thé avec des particules dont la taille est supérieure à 0,8 mm et des particules dont la taille est inférieure à 0,35 mm.

38. La dosette de thé en combinaison avec un support selon l'une quelconque des revendications précédentes, **caractérisés en ce que** la dosette de thé comprend un thé avec une grosseur qui est supérieure à PD et inférieure à OP.

39. La dosette de thé en combinaison avec un support selon la revendication 11, **caractérisés en ce que** une première feuille des deux feuilles, vue au moins en partie de l'extérieur de la dosette de thé, est de forme convexe.

40. La dosette de thé en combinaison avec un support selon la revendication 39, **caractérisés en ce que** une seconde feuille des deux feuilles, vue au moins en partie de l'extérieur de la dosette de thé, est de forme plane ou convexe.

41. La dosette de thé avec son support selon la revendication 1, **caractérisés en ce que** la taille des particules du premier type de thé est inférieure à 0,35 mm.

42. La dosette de thé avec son support selon la revendication 1, **caractérisés en ce que** la taille des particules du deuxième type de thé est supérieure à 0,8 mm.
